# EUROPEAN PATENT APPLICATION

(11) **EP 4 745 869 A1**
(43) Date of publication of application: **20.05.2026**
(21) Application number: 25169369.3
(22) Date of filing: 09.04.2025
(51) Int. Cl.: G06Q 30/0601, B60W 50/08

(54) **METHOD AND APPARATUS FOR SETTING DRIVING MODE OF A VEHICLE**

(30) Priority: 13.11.2024 KR 20240161471; 14.11.2024 KR 20240162089
(71) Applicant: Yellowknife Inc., Seoul 06752 (KR)
(72) Inventor: LEE, Han Sung, 06752 Seoul (KR)
(74) Representative: Jung, Minkyu

(57) **Abstract**

A method of setting a driving mode of a vehicle executed by a computing device includes providing two or more driving modes for a driving-related device of the vehicle, setting a mode of the driving-related device to a driving mode selected by a user from among the provided two or more driving modes, and operating the driving-related device in the set mode.

## Description

### CROSS-REFERENCE TO RELATED APPLICATION

This application claims priority to Korean Patent Application No. 10-2024-0161471, filed on November 13, 2024, and all the benefits accruing therefrom under 35 U.S.C. §119, the contents of which in its entirety are herein incorporated by reference.

### BACKGROUND

### 1. Field

The present disclosure relates to a method of setting a driving mode of a vehicle and a device therefor. More particularly, the present disclosure relates to a method of automatically setting various devices required for vehicle driving to an optimized driving mode according to a situation or providing a driving mode that may be selected by a user, and a computer device for performing the method.

### 2. Description of the Related Art

Recently, the automobile industry has provided various driving modes to maximize driver convenience and driving performance. Driving modes adjust main devices of a vehicle, such as an engine, a suspension, and a steering wheel, to an optimal state by considering a driving environment, characteristics of the vehicle, a driver's preference, etc. The driving modes are mainly provided as basic modes when manufacturing the vehicle, and generally include a normal mode, a sports mode, and an eco mode.

### [RELATED LITERATURES]

### [Patent Literatures]

(Patent Literature 1) Korean Patent Publication No. 10-2021-0119010 (2021.10.05)

### SUMMARY

The present disclosure is directed to providing a method and device for providing various driving modes for driving-related devices of a vehicle and providing optimized settings suitable for a driving environment by selecting or changing these modes. In particular, the present disclosure is to allow drivers to enjoy new driving experiences through a system that may add driving modes through software updates or user purchases even after vehicle manufacturing.

The objectives of the present specification are not limited thereto and may be extended to various objectives that may be derived from embodiments of the present disclosure described below.

In one aspect, a method of setting a driving mode of a vehicle executed by a computing device includes providing two or more driving modes for a driving-related device of the vehicle, setting a mode of the driving-related device to a driving mode selected by a user from among the provided two or more driving modes, and operating the driving-related device in the set mode.

In a preferred embodiment, the two or more driving modes may include a basic driving mode installed by default when the vehicle is manufactured, and an additional driving mode applied to the vehicle after the vehicle is manufactured and shipped, wherein the additional driving mode may include a user-purchasable driving mode that is activated to be applicable to the vehicle based on the user's purchase.

In a preferred embodiment, the additional driving mode may further include an automatic update driving mode that is automatically activated to be applicable to the vehicle according to a software update of the vehicle, regardless of the user's purchase.

In a preferred embodiment, the driving-related device may include at least one of a steering wheel, a suspension, a brake, an engine, a transmission, a vehicle stability control (VSC) system, an anti-lock braking system (ABS), a driving system (Drivetrain), and an advanced driver assistance system (ADAS).

In a preferred embodiment, the providing of the two or more driving modes may include receiving update information about a driving mode of the driving-related device from a remote server outside the vehicle, and updating the basic driving mode and the additional driving mode based on the received update information.

In a preferred embodiment, the providing of the two or more driving modes may include applying and providing distinguishable design elements to the basic driving mode and the user-purchasable driving mode, and when the user-purchasable driving mode is purchased by the user, changing the design element of the purchased user-purchasable driving mode.

In a preferred embodiment, purchasing of the user-purchasable driving mode may include a paid or free purchase.

In a preferred embodiment, the purchasing of the user-purchasable driving mode may be performed through a user interface for payment in the vehicle, or performed by sending a purchase request to a user terminal related to the vehicle and making payment at the user terminal.

In a preferred embodiment, the method may further include, when the user-purchasable driving mode purchased is deactivated based on the received update information, automatically changing to a previously set driving mode.

In a preferred embodiment, in the providing of the two or more driving modes, there may be two or more user-purchasable driving modes, and priorities of the two or more user-purchasable driving modes may be determined and listed based on a currently set driving route or a past driving style of the vehicle.

In a preferred embodiment, the user-purchasable driving mode may support a test mode, and when the test mode is selected by the user, the user-purchasable driving mode may be set for a certain time or distance with no purchase, and driving information during the test mode may be transmitted to a developer of the set user-purchasable driving mode.

In another aspect, there is provided a computer program stored in a computer-readable medium for executing the method described above.

In another aspect, there is provided a computing device in a vehicle capable of setting a driving mode, the computing device being configured to provide two or more driving modes for a driving-related device of the vehicle through a display device, set a mode of the driving-related device to a driving mode selected by a user from among the provided two or more driving modes, and operate the driving-related device in the set mode.

According to the present disclosure, a driver may select, and purchase, subscribe, and test various additional driving modes in addition to a basic driving mode, and a developer may have an opportunity to develop desired driving modes and sell them to various drivers through a platform.

It should be understood that the effects of the present specification are not limited thereto, and may be extended to carious effects that may be derived from the detailed description of embodiments of the present disclosure below.

### BRIEF DESCRIPTION OF THE DRAWINGS

FIG. 1 is a diagram illustrating an example of an operating environment of a system according to an embodiment of the present specification.
FIG. 2 is a block diagram for describing an internal configuration of a computing device according to an embodiment of the present specification.
FIG. 3 is a diagram illustrating a relationship between a vehicle, a server, and a user terminal according to an embodiment of the present specification.
FIG. 4A is a diagram for describing a method of setting a driving mode according to an embodiment of the present specification.
FIG. 4B illustrates examples of a driving-related device related to driving of a vehicle.
FIG. 4C is a table for describing types of driving modes for each driving-related device according to an embodiment of the present specification.
FIGS. 5A to 5C illustrate a user interface where various driving modes of a driving-related device are provided to a vehicle according to an embodiment of the present specification.
FIG. 6 is a diagram for describing a purchase function for a specific driving mode according to an embodiment of the present specification.
FIG. 7 is a flowchart illustrating a method of setting a driving mode of a vehicle according to an embodiment of the present specification.
FIG. 8 is an embodiment related to operation S100 described with reference to FIG. 7.
FIG. 9 is an embodiment related to operation S100 described with reference to FIG. 7.
FIG. 10 is a user interface showing a state where the use of a driving mode is stopped according to an embodiment of the present specification.

### DETAILED DESCRIPTION

Also, in describing embodiments of the present disclosure, detailed descriptions of related well-known functions or configurations that may blur the points of the embodiments of the present disclosure are omitted. Also, in the drawings, parts irrelevant to the description of embodiments of the present specification are omitted, and like reference numerals designate like elements throughout the present specification.

It will be understood that when an element is referred to as being "connected to," "coupled to," or "accessed to" another element, it may be directly connected, coupled, or accessed to the other element or the intervening elements may be present. Also, it will be further understood that when an element is described to "comprise/include" or "have" another element, it specifies the presence of another element but does not preclude the presence of another element unless otherwise described.

In an embodiment of the present specification, the terms, such as first, second, and the like, may be used to describe the elements in the description herein. These terms are used to distinguish one element from another and do not limit the order or importance of the elements unless otherwise stated. Therefore, within the scope of embodiments of the present specification, a first element in an embodiment may be referred to as a second element in another embodiment, and similarly, a second element in an embodiment may be referred to as a first element in another embodiment.

In an embodiment of the present specification, elements that are distinguished from each other are intended to clearly describe each feature, and do not mean that the components are necessarily separated. That is, a plurality of elements may be integrated and implemented in one hardware or software unit, or one element may be distributed and implemented in a plurality of hardware or software units. Therefore, even when not stated otherwise, such embodiments in which the elements are integrated or the element is distributed are also included in the scope of embodiments of the present specification.

In the present specification, a network may be a concept including both wired and wireless networks. In this case, the network may refer to a communication network through which data exchange between a device and a system and between devices may be performed, and is not limited to a specific network.

Embodiments described in the present specification may be implemented as hardware entirely, hardware partially and software partially, or software entirely. In the present specification, the term "unit", "device", "system" or the like indicates a computer-related entity like hardware, a combination of hardware and software, or software. For example, the term "unit", "module", "device", "system" or the like used in the present specification may be, but is not limited to, a process, a processor, an object, an executable file, a thread of execution, a program, and/or a computer. For example, both a computer and an application executed in the computer may correspond to the term "unit", "module", "device", "system" or the like in the present specification.

Additionally, in the present specification, the device may be not only a mobile device such as a smartphone, a tablet PC, a wearable device and a head mounted display (HMD) but also a fixed device such as a PC or an electronic device having a display function. Additionally, for example, the device may be an automotive cluster or an Internet of Things (IoT) device. That is, in the present specification, the device may refer to devices on which the application may run, and is not limited to a particular type. In the following description, for convenience of description, a device on which the application runs is referred to as the device.

In the present specification, there is no limitation in a communication method of a network, and a connection between elements may not be made by the same network method. The network may include not only a communication method using a communication network (e.g., a mobile communication network, a wired Internet, a wireless Internet, a broadcast network, a satellite network, etc.) but also near-field wireless communication between devices. For example, the network may include all communication methods that enable networking between objects, and is not limited to wired communication, wireless communication, 3G, 4G, 5G, or any other methods. For example, the wired and/or network may refer to, but is not limited to, a communication network by at least one communication method selected from the group consisting of local area network (LAN), metropolitan area network (MAN), global system for mobile network (GSM), enhanced data GSM environment (EDGE), high speed downlink packet access (HSDPA), wideband code division multiple access (W-CDMA), code division multiple access (CDMA), time division multiple access (TDMA), Bluetooth, Zigbee, Wi-Fi, voice over Internet protocol (VoIP), long term evolution (LTE) advanced, IEEE802.16m, WirelessMAN-Advanced, HSPA+, 3GPP LTE, mobile WiMAX (IEEE 802.16e), UMB (formerly EV-DO Rev. C), flash-OFDM, iBurst and MBWA (IEEE 802.20) systems, HIPERMAN, beam-division multiple access (BDMA), world interoperability for microwave access (Wi-MAX), and ultrasonic communication.

Elements described in a variety of embodiments are not necessarily essential, and some elements may be optional. Accordingly, an embodiment including some of the elements described in the embodiment is also included in the scope of embodiments of the present specification. Additionally, in addition to the elements described in a variety of embodiments, an embodiment further including other elements is also included in the scope of embodiments of the present specification.

Hereinafter, embodiments of the present disclosure will be described in detail with reference to the drawings.

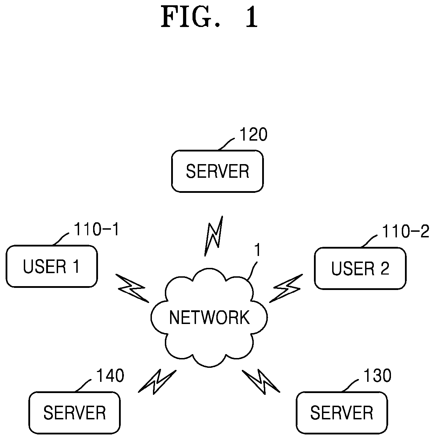

FIG. 1 is a diagram illustrating an example of an operating environment of a system according to an embodiment of the present specification. Referring to FIG. 1, a user device 110, and one or more servers 120, 130, 140 are connected to each other through a network 1. FIG. 1 is an example for describing the present disclosure, and the number of user devices or the number of servers is not limited to that illustrated in FIG. 1.

The user device 110 may be a fixed terminal or a mobile terminal implemented as a computer system. Examples of the user device 110 include a smartphone, a mobile phone, a navigation device, a computer, a laptop computer, a digital broadcasting terminal, a personal digital assistant (PDA), a portable multimedia player (PMP), a tablet PC, a game console, a wearable device, an Internet of Things (IoT) device, a virtual reality (VR) device, and an augmented reality (AR) device. For example, in embodiments, the user device 110 may refer to one of various physical computer systems that may communicate with other servers 120-140 through the network 1 by using a wireless or wired communication method.

Each server may be implemented as a computer device or multiple computer devices that communicate with the user device 110 through the network 1 to provide commands, codes, files, content, services, etc. For example, the server may be a system that provides each service to the user device 110 connected through the network 1. In a more specific example, the server may provide, through an application as a computer program installed and operated on the user device 110, a service (e.g., information provision) desired by the application to the user device 110. In another example, the server may distribute a file for installing and operating the application to the user device 110 and may receive user input information to provide a corresponding service.

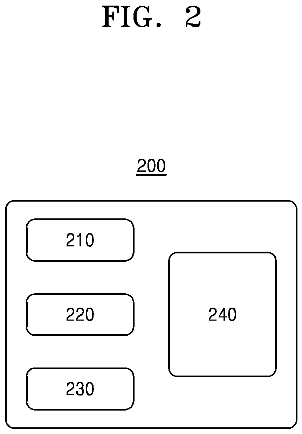

FIG. 2 is a block diagram for describing an internal configuration of a computing device 200 according to an embodiment of the present specification. The computing device 200 may be applied to the user device 110 or the servers 120-140 described with reference to FIG. 1, and each device and server may have the same or similar internal configuration by adding or excluding some components.

Referring to FIG. 2, the computing device 200 may include a memory 210, a processor 220, a communication module 230, and a transmission/reception unit 240. The memory 210 is a non-transitory computer-readable recording medium, and may include a permanent mass storage device such as random-access memory (RAM), read-only memory (ROM), a disk drive, a solid state drive (SSD), or flash memory. The permanent mass storage device such as ROM, SSD, flash memory, or a disk drive may be stored, as a permanent storage device separate from the memory 210, in the device or server. Also, an operating system and at least one program code (e.g., code for a browser installed and operated on the user device 110 or an application installed on the user device 110 to provide a specific service) may be stored in the memory 210. Such software components may be loaded from a computer-readable recording medium separate from the memory 210. The separate computer-readable recording medium may include a computer-readable recording medium such as a floppy drive, a disk, a tape, a DVD/CD-ROM drive, or a memory card.

In another embodiment, the software components may be loaded into the memory 210 through the communication module 230, rather than the computer-readable recording medium. For example, at least one program may be loaded into the memory 210 based on a computer program (e.g., the application) installed by files provided through a network 1 by a file distribution system (e.g., the server) that distributes installation files of applications or developers.

The processor 220 may be configured to process a command of a computer program by performing basic arithmetic, logic, and input/output operations. The command may be provided to the processor 220 by the communication module 230 or the memory 210. For example, the processor 220 may be configured to execute a command received according to program code stored in a recording device such as the memory 210.

The communication module 230 may provide a function for communication between the user device 110 and the servers 120-140 through the network 1, and may provide a function for communication between each of the device 110 and/or the servers 120-140 and another electronic device.

The transmission/reception unit 240 may be a means for interfacing with an external input/output device (not shown). For example, the external input device may include a device such as a keyboard, a mouse, a microphone, or a camera, and the external output device may include a device such as a display, a speaker, or a haptic feedback device.

In another example, the transmission/reception unit 240 may be a means for interfacing with a device in which input and output functions are integrated, such as a touchscreen.

Also, in other embodiments, the computing device 200 may include more components than those illustrated in FIG. 2 according to the nature of a device to which the computing device 200 is applied. For example, when the computing device 200 is applied to the user device 110, the computing device 200 may include at least some of the input/output devices described above or may further include other components such as a transceiver, a global positioning system (GPS) module, a camera, various sensors, and a database. In a more specific example, when the user device is a smartphone, the computing device may further include various components such as an acceleration sensor or a gyro sensor, a camera module, various physical buttons, buttons using a touch panel, an input/output port, and a vibrator for vibration which are generally provided in the smartphone.

The present disclosure relates to a method of providing a more personalized driving experience to a user by setting various driving modes of a vehicle. In particular, the present disclosure describes a method of providing two or more driving modes for various driving-related devices in a vehicle and setting and operating the driving modes according to a user's selection. Also, the present disclosure includes a method of continuously providing a new driving mode even after vehicle manufacturing, by including an option based on a user purchase in a process of adding or updating a driving mode.

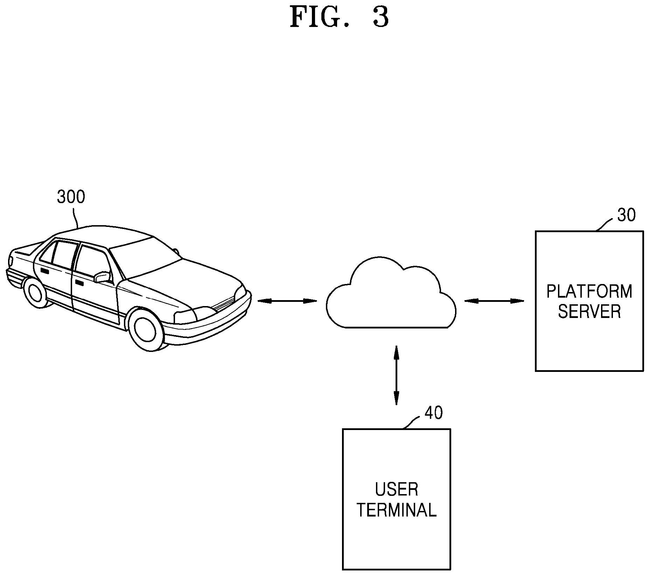

FIG. 3 is a diagram illustrating a relationship between a vehicle, a server, and a user terminal according to an embodiment of the present specification. As shown in FIG. 3, a vehicle 300, a platform server 30, and a user terminal 40 may be connected to each other to communicate with each other through a network. Also, the user terminal 40 and the vehicle 300 may be separately connected to the platform server through short-range communication.

In an embodiment, the user terminal 40 may be a terminal device such as a smartphone held by an occupant in the vehicle 300.

In an embodiment, the platform server 30 may receive and process all information related to the vehicle, such as driving information, driver information, and location information, from the vehicle. Also, in an example, the platform server 30 may perform a function of providing various vehicle driving mode software to the vehicle 300 and providing certain driving mode software to the vehicle 300 according to a user's selection or automatically. That is, the platform server 30 may post vehicle driving mode software through a web or an application such as Google's Play Store or Apple's App Store and may provide a paid or free download to the vehicle according to the user's request or automatically. The user may access a platform application or web through a device in the vehicle or the user terminal, may check a function and content of the driving mode software, and may select purchase, rental, or subscription.

Also, in an example, the platform server 30 may perform a function of providing visual feedback for each driving mode software so that the user intuitively understands and selects a driving mode of the vehicle. The visual feedback is implemented through various visual elements for visually distinguishing functions and effects of driving modes, and may help to easily understand characteristics and performance of the driving modes. For example, when Comfort S mode and Comfort X mode, which are different driving modes manufactured by different developers or the same developer, are uploaded and posted on the platform server, the platform server may apply and provide the user with unique visual designs so that driving characteristics and purposes of the two modes are easily visually distinguished.

For example, the platform server may provide visual feedback to the user so that characteristics of a driving device (e.g., a suspension) when comfort S mode software is applied and characteristics of the driving device when comfort X mode software is applied are visually distinguished. For example, in Comfort S mode, a suspension shape may be expressed as a rounder and software image and a motion may be played smoothly by visually reflecting a design that emphasizes a smooth ride, and in Comfort X mode, a suspension shape may be expressed as a solid and firm image and a motion may be played quickly and dynamically to indicate a design for providing stronger stability. This visual distinction may help the user easily understand the performance and effect of each mode and select a mode that suits his/her driving purpose.

In another example, when a specific driving mode is selected in a driving mode software market, the platform server may classify and provide a visual effect of responding to an external input situation of the vehicle. For example, when a bump or vibration on a road surface is detected in a state where Comfort S mode is activated, a bright color may be used or the motion of the suspension may be expressed with a gentle animation effect in order to gently emphasize the response of the mode. On the other hand, when Comfort X mode is activated, a dark color may be used or the robust driving performance of the vehicle may be expressed with a strong animation effect in order to show a faster and stronger response to the same external input.

As such, because operation characteristics of a driving device according to each driving mode software are visually distinguished and expressed, the user may intuitively understand functions of each mode through visual design and animation effects without simply text or technical explanations, and may quickly and easily select a mode that suits a driving environment. For example, the platform server may visualize the strength of a suspension reaction force in real time with colors or animations by showing a soft reaction force of the suspension with a gentle animation in Comfort S mode and showing a strong reaction force with a fast and intense animation in Comfort X mode, thereby making it possible to clearly recognize a difference between the two modes.

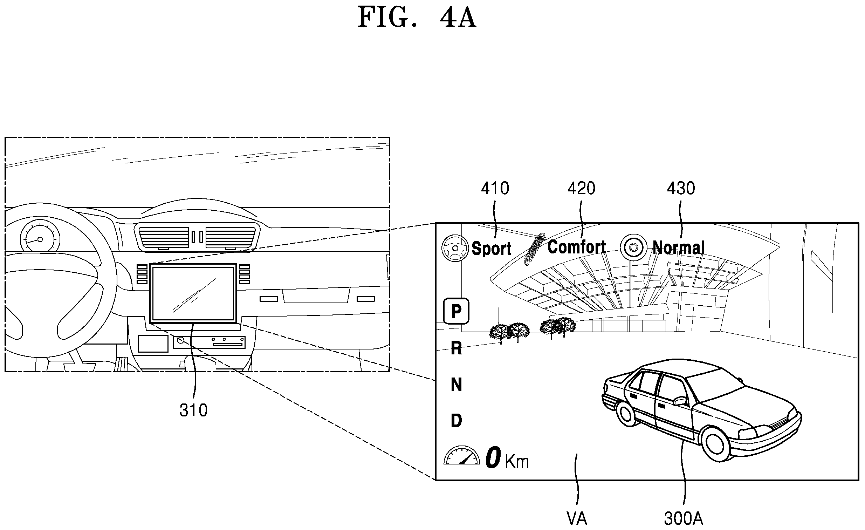

FIG. 4A is a diagram for describing a method of setting a driving mode according to an embodiment of the present specification. Referring to FIG. 4A, a control device (not shown) in a vehicle may receive various driving modes from the platform server 30 and may display the various driving modes on a display device 310 of the vehicle. That is, a user may access a platform (e.g., a web or an application) provided by the platform server through a display in the vehicle (or through a user terminal) and may check the various driving modes and apply the various driving modes to the vehicle.

As shown in FIG. 4A, the platform may display a virtual vehicle 300A in a virtual space VA. The virtual vehicle 300A may be rotated and enlarged through the user's selection (e.g., touch, long touch, or drag), and motion simulation in a driving mode selected by the user may be executed. The motion simulation is the same as described for Comfort X mode and Comfort S mode.

In an embodiment, the platform may provide various driving modes for each of driving-related devices of the vehicle. Referring to FIG. 4A, a steering wheel 410, a suspension 420, and a brake 430 are illustrated as driving-related devices, and a currently set driving mode is displayed for each driving-related device. The user may change a driving mode by selecting the driving-related device or the currently set driving mode.

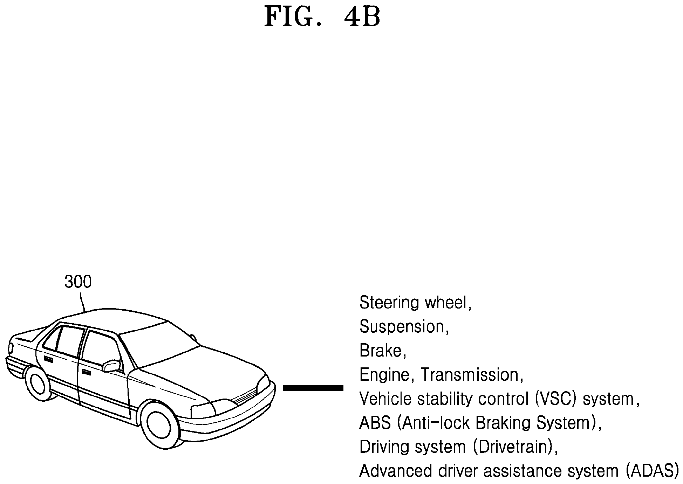

FIG. 4B illustrates examples of a driving-related device related to driving of a vehicle. Referring to FIG. 4B, examples of the driving-related device may include an engine, a transmission, a vehicle stability control (VSC) system, an anti-lock braking system (ABS), a driving system (Drivetrain), and an advanced driver assistance system (ADAS), in addition to the steering wheel, the suspension, and the brake mentioned in FIG. 4A. The present disclosure is not limited to the devices listed in FIG. 4B, and the devices listed in FIG. 4B are representative devices exemplified for the clarity of explanation.

A computing device in the vehicle (e.g., the control device described above) may provide two or more driving modes for a driving-related device of the vehicle. Next, a mode of the driving-related device may be set to a driving mode selected by the user from among the provided driving modes, and the computing device may operate the driving-related device in the set mode.

The user may select and set one of the provided modes, and the driving-related device operates according to the set mode. A driver may optimize the performance of the vehicle according to a driving environment or an individual driving tendency by selecting a driving mode.

In an embodiment of the present specification, the two or more driving modes provided to the vehicle through the platform server may include a basic driving mode 4100 that is basically installed when the vehicle is manufactured and an additional driving mode 4200 that is applied to the vehicle after the vehicle is manufactured and shipped.

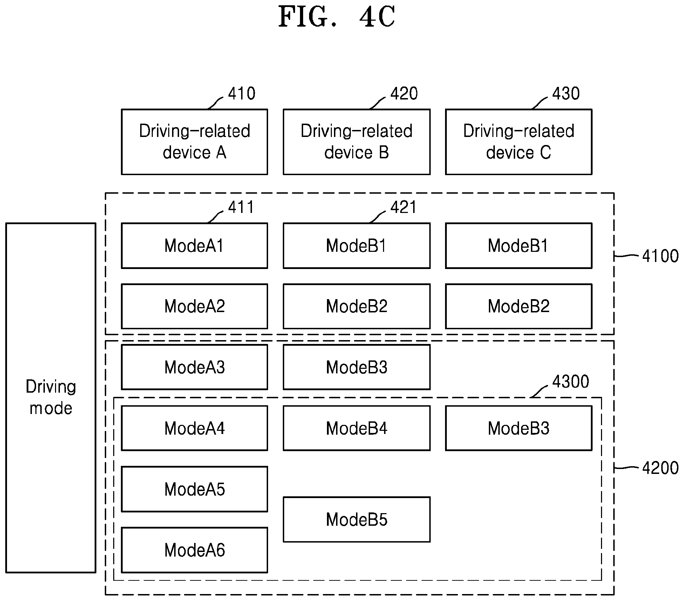

FIG. 4C is a table for describing types of driving modes for each driving-related device according to an embodiment of the present specification. This table may be provided through the web/application platform of the platform server described above. Referring to FIG. 4C, mode A1, mode B1, mode C1, etc. are basic driving modes installed by a manufacturer when the vehicle is manufactured. Typically, normal, comfort, and sports modes may correspond to the modes.

Also, in an embodiment of the present specification, the platform sever may provide an additional driving mode that is not installed or applied to the vehicle at the time of vehicle shipment but is applied after shipment. The provided driving modes may be displayed on the display of the vehicle through the computing device of the vehicle. The additional driving mode may include a user-purchasable driving mode 4300 that is activated to be applicable to the vehicle based on the user's purchase through the platform. Also, the additional driving mode may further include an automatic update driving mode (mode A3 and mode B3 of FIG. 4C) that is activated to be applicable to the vehicle according to a software update of the vehicle, regardless of the user's purchase.

That is, in the present specification, the user-purchasable driving mode and the automatic update driving mode are driving modes applied to the vehicle based on the user's intention or behavior, and have different characteristics from driving modes that are already installed at the time of shipment or are automatically added by the manufacturer according to a software update of the vehicle. The user-purchasable driving mode may be manufactured by various developers other than the manufacturer so that each driving-related device has a characteristic performance based on various sensor information and driving information of the vehicle. For example, the user may have various driving experiences through various driving mode software such as capturing images with different textures according to various camera applications of a smartphone.

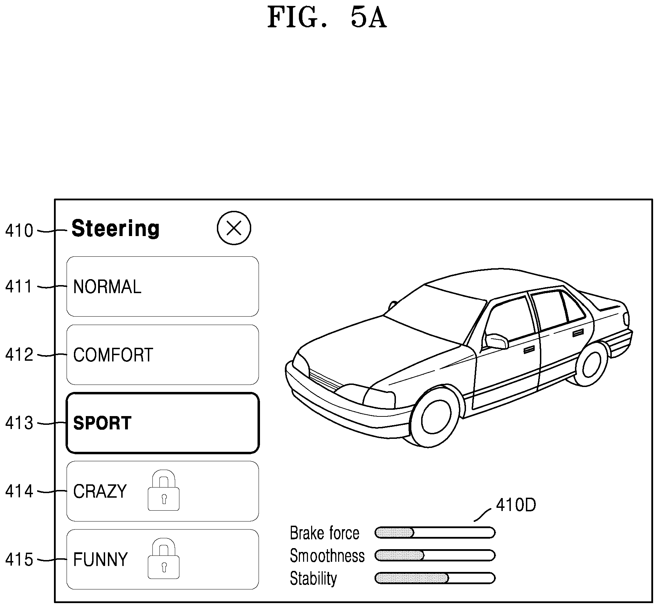

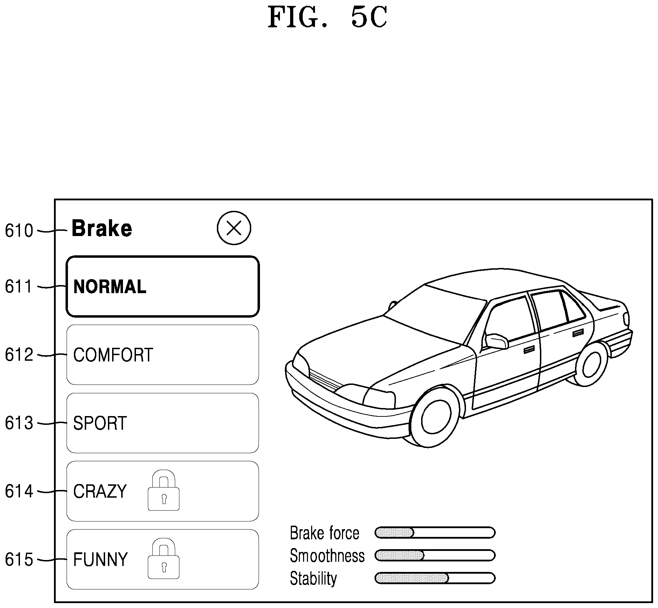

FIGS. 5A to 5C illustrate a user interface where various driving modes of a driving-related device are provided to a vehicle according to an embodiment of the present specification.

Referring to FIG. 5A, a user may select any one of various driving modes 411-415 for a steering wheel and may apply the selected driving mode to the vehicle. Referring to FIG. 5A, the driving modes 411 to 413 are basic driving modes, indicating a state where the driving mode 413 is currently applied, and performance according to the driving mode 413 is displayed on one area 410D. Also, In FIG. 5A, the driving modes 414 and 415 are user-purchasable driving modes that are not yet activated. The driving modes 414 and 415 are driving modes that were not present at the time of shipment of the vehicle, but, after safety, etc. are verified by a platform server, are posted on a platform to be displayed in the vehicle.

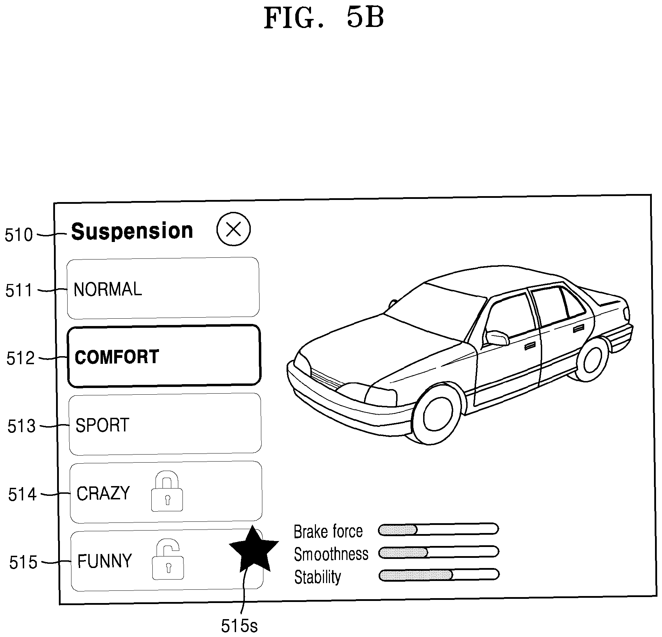

When a computing device of the vehicle provides two or more driving modes, a basic driving mode and a user-purchasable driving mode may be provided by applying design elements that are different from each other. For example, as shown in FIG. 5B, driving modes 514 and 515 may be displayed with locks to indicate that a specific user action, such as a purchase, is required. Also, when the user-purchasable driving mode is purchased (or rented or tested) by the user, the design element of the purchased user-purchasable driving mode may be changed. For example, as shown in FIG. 5B, the lock may be opened, a star may be displayed, or the purchased driving mode may be changed to the same design as the basic mode. The different or identical designs described herein may include fonts, background colors, specific images, etc., excluding letters for describing each driving mode.

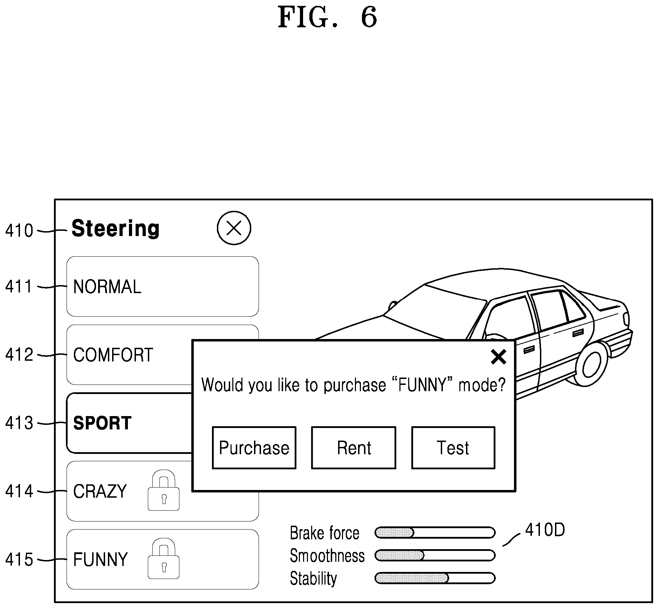

FIG. 6 is a diagram for describing a purchase function for a specific driving mode according to an embodiment of the present specification. Referring to FIG. 6, when the driving mode 415 is selected by the user, the computing device may present a choice of purchasing, renting, or testing the driving mode. In an example, purchasing of a user-purchasable driving mode may include a paid or free purchase.

Purchasing of a user-purchasable driving mode may be performed through a user interface for payment in the vehicle, or may be performed by sending a purchase request to the user terminal 40 related to the vehicle and making payment at the user terminal 40.

Also, purchasing may mean permanently downloading a corresponding driving mode software to the vehicle, and renting may mean downloading for a certain period of time. Testing may mean downloadable for a shorter period of time than renting. When a corresponding driving mode is executed through testing, driving-related information of the vehicle (steering wheel operation information, engine information, brake information, suspension information, etc.) generated while the corresponding driving mode is used may be provided to a developer of the tested driving mode or the platform server. That is, the user may use the driving mode for a certain period of time by providing his/her driving information.

That is, a user-purchasable driving mode may support a test mode, and when the test mode is selected by the user, the user-purchasable driving mode may be set for a certain time or distance with no purchase, and driving information during the test mode may be transmitted to a developer of the user-purchasable driving mode and used for the developer's profit.

In an embodiment of the present specification, because the vehicle 300 communicates with the platform server 30 periodically or aperiodically, the platform server may provide a driving mode newly uploaded to the platform to the vehicle or may notify the vehicle of a driving mode that has been deactivated on the platform. Specifically, a step in which the computing device of the vehicle provides a driving mode to the user may include receiving update information on a driving mode of a driving-related device from a remote server (platform server) outside the vehicle and updating the basic driving mode and additional driving mode based on the received update information.

For example, it may be found that a specific user-purchasable driving mode has a safety defect later. In this case, the platform server may retrieve the driving mode applied to the vehicle in order to stop the use of the driving mode. This retrieval may be implemented through deactivation. When a currently applied driving mode is deactivated, the computing device of the vehicle may automatically change to a previously set driving mode. That is, referring to FIG. 6, when the purchased driving mode 415 is deactivated, the steering wheel may automatically change to the sports driving mode 413 that is a previously set mode.

Also, updating a driving mode may include improving the driving mode. In this case, the improved (upgraded) driving mode may be automatically set, or may be set after asking the user whether to change to the updated driving mode. When a driving mode currently applied to the vehicle is upgraded, the user is asked whether to apply the upgraded driving mode, but when a driving mode that is not currently applied to the vehicle is upgraded, the driving mode may be automatically replaced with the upgraded driving mode.

According to an embodiment, the platform server 30 may additionally include a function of suggesting an optimal or customized driving mode combination based on driving information and driving mode setting information collected from a plurality of users. Accordingly, the platform server may analyze driving data according to regional characteristics, road conditions, and seasonal climate to which each vehicle belongs, may form a driving mode combination that suits various user profiles, and may provide the driving mode combination to the vehicle as update information.

In detail, the platform server may generate a driving mode combination optimized for a specific driving environment by combining driving mode setting records and actual driving data collected from multiple users. For example, the platform server may distinguish data from users who mainly drive on highways and users who drive in urban areas, and may propose a combination of a suspension, an engine, and a transmission that are suitable for each driving environment. This combination may be added to the platform server as a new driving mode and may be provided to the vehicle, allowing the user to select an optimal driving mode that suits his/her driving habits.

Also, the platform server may learn a driving pattern and mode settings of a specific user group and may provide a personalized recommended driving mode. For example, for users who prioritize fuel efficiency, a driving mode optimized for fuel efficiency may be recommended, and for users who prefer strong output and acceleration performance, a high-performance sports mode may be recommended. Such recommendation information may be provided in real time on a display of the vehicle, and the user may easily set a driving mode that suits his/her driving style.

The platform server may also provide customized default settings by learning and storing a driving mode combination frequently used by a specific user. For example, when a user mainly drives in a combination of comfort mode and eco mode, the platform server may provide an intermediate setting value optimized for the user. Such a customized combination maximizes the user's driving convenience and supports quick response to various driving environments.

Also, the platform server may analyze driving habits of users through an artificial intelligence learning algorithm and may optimize a driving mode combination according to various variables. In this case, the platform server may learn a driving route and pattern of a specific user by using machine learning, and may provide a most suitable driving mode combination for the route in real time. For example, the platform server may analyze a road condition and congestion of a driving route in real time and may recommend an optimal mode to a user, which may help reduce fuel consumption and increase driving efficiency.

In addition, the platform server may collect data from multiple users and may use the data to develop a new driving mode based on the data. The platform server may analyze meaningful patterns and mode effects according to driving environments in various user data, and may manufacture and distribute a new driving mode that provides optimal performance under a specific condition. For example, the platform server may support various driving environments of drivers more safely and conveniently by newly developing and distributing a driving mode optimized for winter or rainy weather, a mode suitable for long-distance driving on highways, etc.

Such a user-customized driving mode recommendation function may be implemented through real-time communication between the platform server and a vehicle. In particular, when an optimal driving mode combination is proposed through a display device of a vehicle, a driving-related device setting state of the vehicle may be visually displayed and thus, the user may easily understand the effect of the driving mode combination. For example, a display may be used to graphically display main features of each driving mode or show expected fuel efficiency, acceleration performance, etc., when a specific mode is set, thereby providing intuitive assistance to the user in selecting a driving mode.

The platform server may share driving mode setting information between users so that the users with similar driving environments refer to an optimal driving mode. For example, an effective driving mode combination among users driving in the same area may be shared through the platform server, and this combination may be recommended to other users in the area. Accordingly, users may easily apply mode settings suitable for a driving environment and may receive the driving experiences by utilizing the advantages of each mode.

In an embodiment of the present specification, when there are two or more user-purchasable driving modes for one driving-related device, priorities of the user-purchasable driving modes may be determined and listed based on a currently set driving route or a past driving style.

Referring to FIG. 5B, the user-purchasable driving modes 514 and 515 are displayed. If a designation and a route currently set for the vehicle require off-road driving, a driving mode suitable for off-road driving may be displayed at the top. Alternatively, a driving mode suitable for the user's driving style may be displayed at the top with priority based on the user's past driving style.

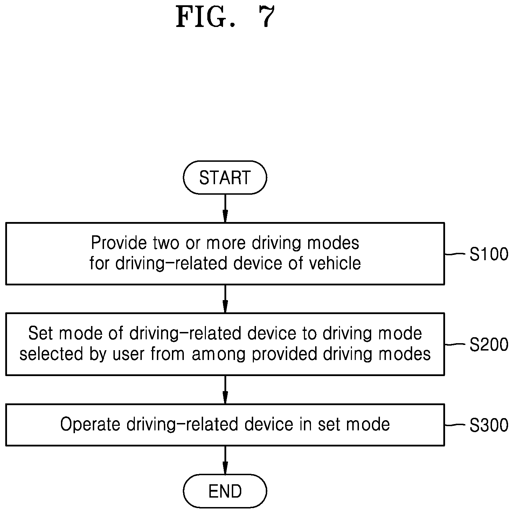

FIG. 7 is a flowchart illustrating a method of setting a driving mode of a vehicle according to an embodiment of the present specification. Referring to FIG. 7, a method of setting a driving mode of a vehicle executed by a computing device may include operation S100 in which two or more driving modes for a driving-related device of the vehicle are provided, operation S200 in which a mode of the driving-related device is set to a driving mode selected by a user from among the provided driving modes, and operation S300 in which the driving-related device operates in the set mode. The operations may be executed by a computing device in the vehicle by interworking the computing device in the vehicle with a platform server.

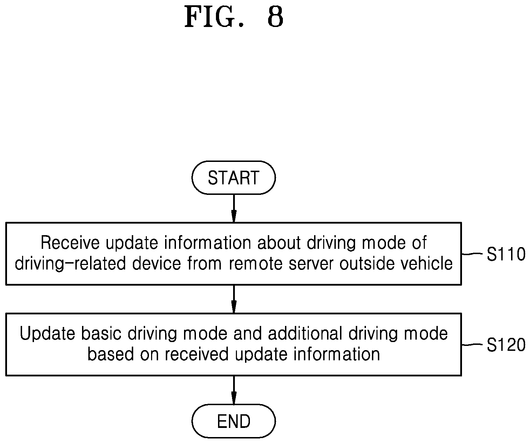

FIG. 8 is an embodiment related to operation S100 described with reference to FIG. 7. Referring to FIG. 8, operation S100 in which two or more driving modes are provided includes operation S110 in which update information about a driving mode of the driving-related device is received from a remote server outside the vehicle and operation S120 in which a basic driving mode and an additional driving mode are updated based on the received update information. That is, the computing device of the vehicle may check information on the platform server periodically or aperiodically and may synchronize results thereof.

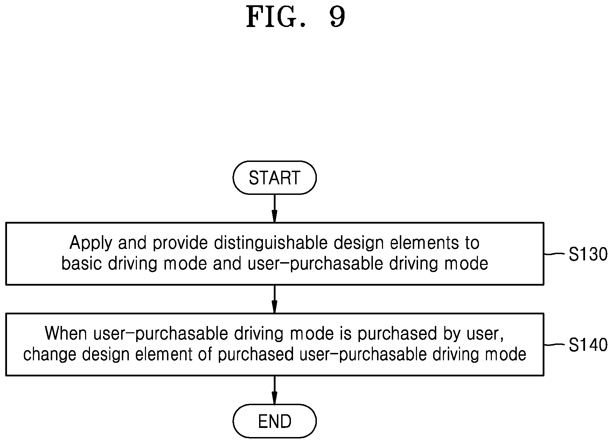

FIG. 9 is an embodiment related to operation S100 described with reference to FIG. 7. Referring to FIG. 9, operation S100 in which two or more driving modes are provided may include operation S130 in which distinguishable design elements are applied and provided to the basic driving mode and a user-purchasable driving mode and operation S140 in which, when the user-purchasable driving mode is purchased, the design element of the purchased user-purchasable driving mode is changed.

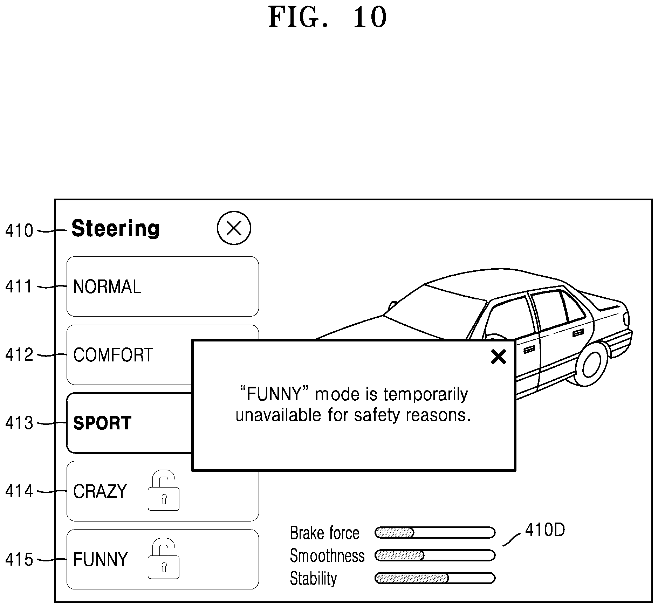

FIG. 10 is a user interface showing a state where the use of a driving mode is stopped according to an embodiment of the present specification. Referring to FIG. 10, as described with reference to FIG. 8, a vehicle may receive update information on a driving mode from an external server, and when a specific driving mode may not be used as an updating result, the driving mode may be automatically deactivated even if the driving mode is purchased by a user. Also, when the user selects to apply the driving mode, as shown in FIG. 10, a reason why the driving mode is currently deactivated or may not be applied to the vehicle may be displayed.

That is, in the present disclosure, various driving mode software for various driving-related devices or combinations of driving-related devices may be provided to users. A platform server may provide post-management for driving modes provided to vehicles in order to ensure safety while providing such diversity.

Regarding the driving mode described above, although a plurality of driving modes correspond to one driving-related device, this is only an example, and a plurality of driving-related devices may be linked to one driving mode. That is, the platform server of the present specification may perform a function of distributing one or more user-purchasable driving mode software that defines operation characteristics of one or more driving-related devices. Furthermore, the platform server may provide visual information tailored to characteristics in a three-dimensional space so that a user visually distinguishes characteristics of each driving mode software.

The embodiments described above may be implemented at least partially as a computer program and recorded on a computer-readable recording medium. The computer-readable recording medium on which the program for implementing the embodiments is recorded includes all types of recording devices in which data readable by a computer is stored. Examples of the computer-readable recording medium include read-only memory (ROM), random-access memory (RAM), compact disk (CD)-ROM, a magnetic tape, and an optical data storage device. Also, the computer-readable recording medium may be distributed over network-connected computer systems so that computer-readable code is stored and executed in a distributed fashion. Also, functional programs, code, and code segments for implementing the present embodiment will be readily understood by one of ordinary skill in the art to which the present embodiment belongs.

While the present specification has been particularly shown and described with reference to embodiments thereof, they are provided for the purposes of illustration and it will be understood by one of ordinary skill in the art that various modifications and equivalent other embodiments may be made from the present disclosure. It should be understood that such modifications are included in the technical scope of the present specification. Accordingly, the true technical scope of the present specification should be determined by the technical idea of the appended claims to include other implements, other embodiments, and equivalents to the claims.

## Claims

1. A method of setting a driving mode of a vehicle executed by a computing device, the method comprising:
providing two or more driving modes for a driving-related device of the vehicle;
setting a mode of the driving-related device to a driving mode selected by a user from among the provided two or more driving modes; and
operating the driving-related device in the set mode.

2. The method of setting a driving mode of a vehicle according to claim 1, wherein the two or more driving modes comprise:
a basic driving mode installed by default when the vehicle is manufactured; and
an additional driving mode applied to the vehicle after the vehicle is manufactured and shipped,
wherein the additional driving mode comprises a user-purchasable driving mode that is activated to be applicable to the vehicle based on the user's purchase.

3. The method of setting a driving mode of a vehicle according to claim 2, wherein the additional driving mode further comprises an automatic update driving mode that is automatically activated to be applicable to the vehicle according to a software update of the vehicle, regardless of the user's purchase.

4. The method of setting a driving mode of a vehicle according to any one of claims 1 to 3, wherein the driving-related device comprises at least one of a steering wheel, a suspension, a brake, an engine, a transmission, a vehicle stability control (VSC) system, an anti-lock braking system (ABS), a driving system (Drivetrain), and an advanced driver assistance system (ADAS).

5. The method of setting a driving mode of a vehicle according to any one of claims 2 to 4, wherein the providing of the two or more driving modes comprises:
receiving update information about a driving mode of the driving-related device from a remote server outside the vehicle; and
updating the basic driving mode and the additional driving mode based on the received update information.

6. The method of setting a driving mode of a vehicle according to any one of claims 2 to 5, wherein the providing of the two or more driving modes comprises:
applying and providing distinguishable design elements to the basic driving mode and the user-purchasable driving mode; and
when the user-purchasable driving mode is purchased by the user, changing the design element of the purchased user-purchasable driving mode.

7. The method of setting a driving mode of a vehicle according to any one of claims 2 to 6, wherein purchasing of the user-purchasable driving mode comprises a paid or free purchase.

8. The method of setting a driving mode of a vehicle according to any one of claims 2 to 7, wherein the purchasing of the user-purchasable driving mode is
performed through a user interface for payment in the vehicle, or
performed by sending a purchase request to a user terminal related to the vehicle and making payment at the user terminal.

9. The method of setting a driving mode of a vehicle according to claim 5, further comprising, when the user-purchasable driving mode purchased is deactivated based on the received update information, automatically changing to a previously set driving mode.

10. The method of setting a driving mode of a vehicle according to any one of claims 1 to 9, wherein, in the providing of the two or more driving modes,
there are two or more user-purchasable driving modes, and
priorities of the two or more user-purchasable driving modes are determined and listed based on a currently set driving route or a past driving style of the vehicle.

11. The method of setting a driving mode of a vehicle according to any one of claims 2 to 10, wherein
the user-purchasable driving mode supports a test mode, and when the test mode is selected by the user, the user-purchasable driving mode is set for a certain time or distance with no purchase, and
driving information during the test mode is transmitted to a developer of the set user-purchasable driving mode.

12. A computer program stored in a computer-readable medium for executing the method according to any one according to claims 1 to 11 on a computer.

13. A computing device in a vehicle capable of setting a driving mode, the computing device being configured to
provide two or more driving modes for a driving-related device of the vehicle through a display device,
set a mode of the driving-related device to a driving mode selected by a user from among the provided two or more driving modes, and
operate the driving-related device in the set mode.
